# EUROPEAN PATENT SPECIFICATION

(11) **EP 0 538 246 B1**
(45) Date of publication and mention of the grant of the patent: **22.02.1995**
(21) Application number: 90902720.3
(22) Date of filing: 26.01.1990
(51) Int. Cl.: A01N 25/02

(54) **PYRETHROID FORMULATIONS OF REDUCED PARESTHESIA**
PYRETHROID-MISCHUNGEN MIT REDUZIERTER PARÄSTHESIE
COMPOSITIONS DE PYRETHROIDES A PARESTHESIE REDUITE

(30) Priority: 30.01.1989 US 303357
(43) Date of publication of application: 28.04.1993
(73) Proprietor: ZENECA INC., Wilmington, Delaware 19897 (US)
(72) Inventor: FERSCH, Kenneth, E., Apex, North Carolina 27502 (US)
(74) Representative: Bishop, Nigel Douglas
(86) International application number: US9000575
(87) International publication number: WO9008467

(56) References cited:
- EP-A- 0 149 051
- EP-A- 0 208 853
- EP-A- 0 214 477
- EP-A- 0 238 184
- EP-A- 0 322 820
- EP-A-02 133 28
- WO-A-89/09541
- DE-A- 3 508 643

## Description

This invention relates to pyrethroids, and in particular to formulations of pyrethroids for agricultural use.

### BACKGROUND OF THE INVENTION

Pyrethroids, which are synthetic derivatives of naturally occurring pyrethrins, are well known as insecticidal agents offering the powerful and selective insecticidal action of the pyrethrins without the rapid decomposition which the pyrethrins undergo upon exposure to the environment.

The handling of pyrethroid formulations is known in some cases to provoke an adverse skin reaction. This reaction has been described as a burning, tingling, numbing or prickling sensation, which is most pronounced on regions of the handler's face, unaccompanied by redness or irritation. This paresthesia (or paraesthesia) is generally associated with trace amounts of the pyrethroid being transferred to the handler's face through inadvertent touching by a contaminated hand. The problem is particularly acute in solid formulations (including formulations containing solid phases) such as dusts and granules.

Attempts to lessen or avoid paresthesia have included the taking of precautions to ensure that containers are tightly sealed against the escape of dust, and the use of facial barrier creams. These measures are not of uniform effectiveness, and require extra care to ensure that they are followed.

The prior art document EP-A 213328 refers to pesticidal compositions made by dissolving pyrethroid insecticides in a mono/poly phenalkyl benzene of a melting point below 0°C and impregnating a granule material.

In opposition to this known method, the process of the invention involves a further aggregation of the solid material particles in the presence of the oil in water emulsion of the pyrethroid dissolved in the organic phase and additional hydration water in order to form granules in which the pyrethroid is evenly dispersed throughout the granule.

### SUMMARY OF THE INVENTION

It has now been discovered that the tendency of a pyrethroid formulation to produce paresthesia is markedly reduced by the inclusion of certain types of aromatic solvents in the formulation, particularly those aromatic solvents having relatively high flash points. Evidence of the reduced paresthesia is observable directly as well as by a decrease in the tendency of the pyrethroid to form microscopic crystals in the formulation. The pyrethroid is thus dissolved in the aromatic solvent to form an organic solution which is combined with other ingredients commonly used in agricultural formulations, particularly those formulations in which the pyrethroids are commonly used. The solvent may be used in place of the conventional solvents which are normally used in preparing the formulation in accordance with standard procedures.

### DETAILED DESCRIPTION OF THE INVENTION AND PREFERRED EMBODIMENTS

The present invention is directed to a process for obtaining a solid granular formulation of a pyrethroid insecticide having a reduced tendency to produce paresthesia and having a reduced tendency to form microscopic crystals of the pyrethroid in the formulation which comprises the steps of
(a) preparing a solution of the pyrethroid in an aromatic solvent having a flash point above about 50°C,
(b) admixing the solution with water in the presence of at least one emulsifier to form an oil-in-water emulsion,
(c) admixing the oil-in-water emulsion with a hydratable solid material and additional water to aid in the emulsification and to serve as a source for hydrating the solid material in an agglomeration device to produce granules, and
(d) drying the granules.

The aromatic solvents utilized in the practice of the present invention form organic solutions of the pyrethroids, the organic solutions then incorporated into the formulations, preferably with substantially full retention of the aromatic solvent.

As stated above, the aromatic solvent will be one which has a relatively high flash point, generally above about 50°C. Preferred solvents are those with flash points of about 50°C to about 200°C, more preferably about 75°C to about 150°C, and most preferably about 90°C to about 125°C. The solvent may be a single species or a mixture of species. Mixtures may include those combining different aromatics as well as those combining aromatics with other species such as paraffins and cycloparaffins. Mixtures of C₈ aromatics and higher, particularly C₁₀-C₁₅, are particularly useful. among the many examples of such solvents are the various pesticide solvents available commercially, such as AROMATIC 200 and SOLVESSO 200, both products of Exxon Corporation, Houston, Texas.

The relative amounts of pyrethroid and solvent in the solution may vary widely for field application purposes, and the actual proportion is not critical. In certain situations, the proportions may be limited by considerations of economy and efficiency, and the particular type of formulation ultimately prepared. Solubility limits may also exist in some cases. In most applications, weight ratios ranging from about 0.1:1 to about 10:1 (pyrethroid to solvent), will provide the best results. Preferred weight ratios are 0.3:1 to 3:1, with 1:1 to 2:1 particularly preferred for granular formulations.

Among the various types of formulations, granules are of particular interest in the present invention, due to the manner in which they are handled and the manner in which they expose a large surface area of the solution to the environment. The solution resides in the open pores of the granules and generally coats the granule surface. A wide range of hydratable granular materials may be used, notably attapugite, bentonite, kaolinite, montmorillonite, and pyrophyllite clays, and fuller's earth, calcium carbonate, calcium sulfate and silica.

Granules thus bearing these solutions are prepared, for example, with a conventional equipment such as rolling pans or mills. The solution can be incorporated during formation of the granule itself. This method is of particular applicability to granules formed by the use of an agglomerator. As an example of this method, the pyrethroid is first prepared as an oil-in-water emulsion, the oil phase being the solution of the pyrethroid in the aromatic solvent, containing emulsifiers conventionally used for this purpose. The emulsion is then combined with the solid material from which the granule is made plus additional water to aid in the emulsification and to serve as a source for hydrating the solid granule material. The additional water may optionally contain an agglomeration accelerator. The combined materials are metered at preselected proportions into an agglormerating device, such as the type supplied by Schugi Process Engineers U.S.A., Skillman, New Jersey, which forms the mixture into granules which are dropped directly into a fluid bed dryer which removes the free water. The dryer discharges the granules to a vibratory screen which sizes the granules to the desired size range, and the fines are recycled.

In a typical system, an oil-in-water emulsion is formed by combining the following ingredients in the proportions given:

| | |
|---|---|
| Technical Pyrethroid: | x parts by weight |
| TWEEN 40: | 77.8 parts by weight |
| SPAN 40: | 8.1 parts by weight |
| AROMATIC 200: | 246.7 parts by weight |
| Water: | to 1000 parts by weight total emulsion |

where TWEEN 40 and SPAN 40 are emulsifiers (a polyoxyethylene sorbitan monopalmitate and a sorbitan monopalmitate, respectively, supplied by ICI Americas Inc., Wilmington, Delaware), and the amount of pyrethroid (designated x above) is selected to achieve 350 parts by weight of pyrethroid per 1000 parts by weight of the emulsion. This is combined with free water containing 1.0% by weight K₂SO₄ (agglomeration accelerator), and plaster of paris (calcium sulfate). the feed rate of the free water is approximately 24% of that of the plaster of paris, and the emulsion rate is selected such that the final product after removal of fee moisture (i.e., exclusive of water of hydration) will contain approximately 15 parts by weight of pyrethroid per 1000 parts by weight of the total impregnated granule. The particles are sized to -20, +50 mesh, with a bulk density (untamped) of 47-54 lb/ft³ (0.75-0.86 g/cm³).

This invention is applicable to pyrethroids in general. This covers a wide variety of species, and the invention bears varying degrees of importance depending on the tendency of these species and formulations containing them to induce paresthesia. Examples of pyrethroids to which the invention may be applied are:
allethrin
alphametrin
barthrin
biopermethrin
bioresmethrin
cismethrin
cyclethrin
cyfluthrin
cyhalothrin
cypermethrin
deltamethrin
dimethrin
fenothrin
fenpropanate
fenvalerate
flucythrin
fluvalinate
furethrin
indothrin
permethrin
phthalithrin
resmethrin
tefluthrin
tetramethrin
Pyrethroids of particular interest for the purposes of the present invention are those having the formula 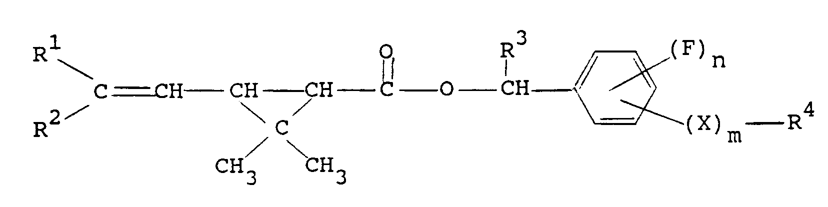
in which
R¹ and R² are independently methyl, halo, or trifluoromethyl;
R³ is hydrogen or cyano;
R⁴ is C₁-C₆ alkyl, C₂-C₆ alkenyl, phenyl or benzyl;
X is oxygen or sulfur;
m is zero or one; and
n is zero to four.

Species of particular interest within the scope of this formula are those in which R¹ and R² are independently chloro or trifluoromethyl; R³ is hydrogen or cyano; R⁴ is methyl or phenyl; X is oxygen; m is zero or one; and n is zero to four. Specific species of particular interest within the formula are:
3-(phenoxyphenyl) methyl (1RS)-*cis,trans*-3-(2,2-dichloroethenyl)-2,2-dimethyl cyclopropane carboxylate (permethrin): 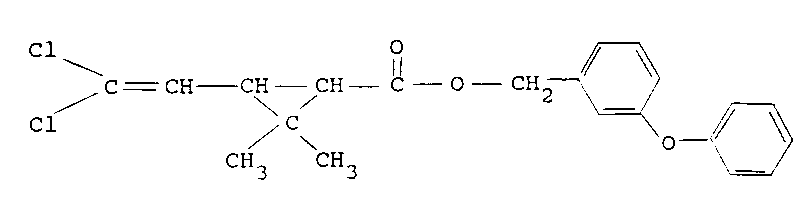
α-cyano-3-phenoxybenzyl (±) *cis,trans*-3-(2,2-dichlorovinyl)-2,2-dimethyl cyclopropane carboxylate (cypermethrin): 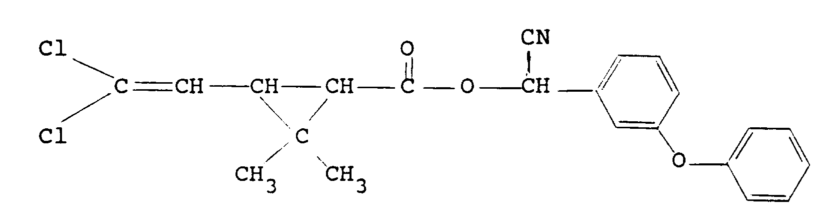
α-cyano-3-phenoxybenzyl (±) *cis,trans*-3-(2-chloro-2-trifluoromethylvinyl)-2,2-dimethyl cyclopropane carboxylate (cyhalothrin): 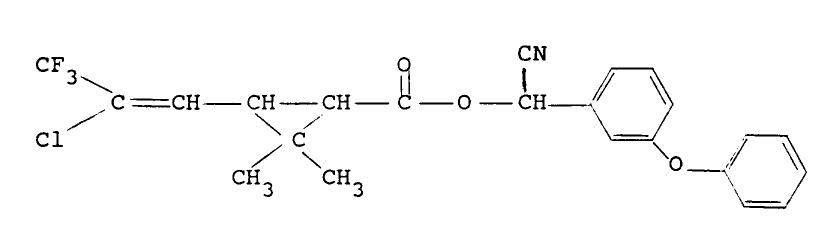
2,3,5,6-tetrafluoro-4-methylbenzyl *cis*-3-(Z-2-chloro-3,3,3-trifluoroprop-1-enyl)-2,2-dimethyl cyclopropane carboxylate (tefluthrin):

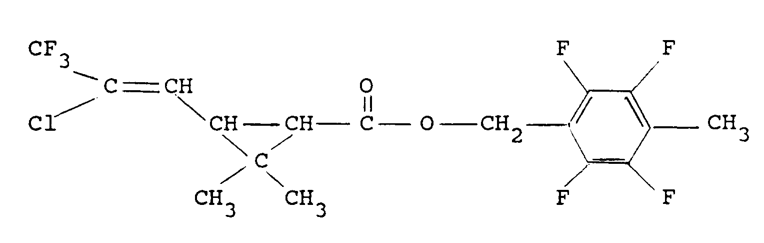

## Claims

1. A process for obtaining a solid granular formulation of a pyrethroid insecticide having a reduced tendency to produce paresthesia and having a reduced tendency to form microscopic crystals of the pyrethroid in the formulation which comprises the steps of
(a) preparing a solution of the pyrethroid in an aromatic solvent having a flash point above about 50°C,
(b) admixing the solution with water in the presence of at least one emulsifier to form an oil-in-water emulsion,
(c) admixing the oil-in-water emulsion with a hydratable solid material and additional water to aid in the emulsification and to serve as a source for hydrating the solid material in an agglomeration device to produce granules, and
(d) drying the granules.

2. A process according to claim 1 wherein the hydratable solid material is calcium sulphate hemihydrate.

3. A process according to claim 1 wherein the pyrethroid insecticide is selected from compounds having the formula 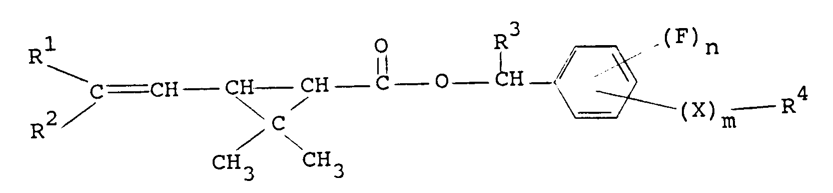 in which R¹ and R² are independently selected from the group consisting of chloro and trifluoromethyl; R³ is hydrogen or cyano; R⁴ is selected from the group consisting of methyl and phenyl; X is oxygen; m is zero or one; and n is zero to four.

4. A process according to claim 3 wherein the compound is 2,3,5,6-tetrafluoro-4-methylbenzyl *cis*-3-(Z-2-chloro-3,3,3-trifluoroprop-1-enyl)-2,2-dimethylcyclopropane carboxylate.

5. A process according to claim 1 the aromatic solvent is one having a flash point of about 90°C to about 125°C.

6. A process according to claim 1 wherein the granules are dropped directly from the agglomeration device into a fluid bed drier.

## Patentansprüche

1. Verfahren zum Erhalt einer festen, körnigen Formulierung eines Pyrethroid-Insecticids mit einer verringerten Tendenz zur Erzeugung von Parästhesie und einer verringerten Tendenz zur Bildung mikroskopischer Kristalle des Pyrethroids in der Formulierung, bei dem:
(a) eine Lösung des Pyrethroids in einem aromatischen Lösungsmittel mit einem Flammpunkt oberhalb etwa 50°C hergestellt wird,
(b) die Lösung mit Wasser in Gegenwart mindestens eines Emulgiermittels zur Bildung einer Öl-in-Wasser-Emulsion vermischt wird,
(c) die Öl-in-Wasser-Emulsion mit einem hydratisierbaren festen Stoff vermischt und zusätzliches Wasser zur Unterstützung der Emulgierung und als Quelle für die Hydratisierung des festen Stoffs in einer Agglomerationseinrichtung zur Bildung von Körnern hinzugegeben wird, und
(d) die Körner getrocknet werden.

2. Verfahren nach Anspruch 1, bei dem es sich bei dem hydratisierbaren festen Stoff um Calciumsulfat-Halbhydrat handelt.

3. Verfahren nach Anspruch 1, bei dem das Pyrethroid-Insecticid aus Verbindungen mit der folgenden Formel ausgewählt ist: 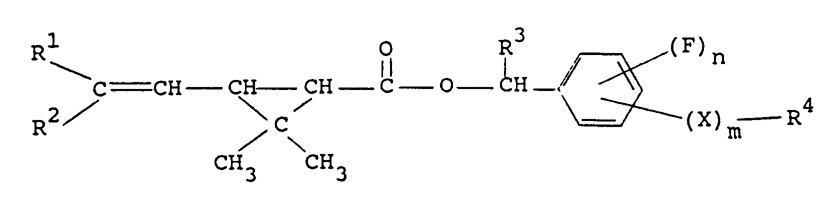 in der R¹ und R² unabhängig aus der Gruppe ausgewählt sind, die aus Chlor und Trifluormethyl besteht, R³ für Wasserstoff oder Cyano steht, R⁴ aus der Gruppe ausgewählt ist, die aus Methyl und Phenyl beteht, X für Sauerstoff steht, m für 0 oder 1 steht, und n für 0 bis 4 steht.

4. Verfahren nach Anspruch 3, bei dem es sich bei der Verbindung um cis-3-(Z-2-Chlor-3,3,3-trifluorprop-1-enyl)-2,2-dimethylcyclopropancarbonsäure-2,3,5,6-tetrafluor-4-methylbenzylester handelt.

5. Verfahren nach Anspruch 1, bei dem es sich bei dem aromatischen Lösungsmittel um eines handelt, das einen Flammpunkt von etwa 90°C bis etwa 125°C besitzt.

6. Verfahren nach Anspruch 1, bei dem die Körner direkt aus der Agglomerationseinrichtung in einen Wirbelschichttrockner gegeben werden.

## Revendications

1. Procédé pour obtenir une formulation granulaire solide d'un insecticide pyréthroïde ayant une tendance réduite à produire la paresthésie et ayant une tendance réduite à former des cristaux microscopiques du pyréthroide dans la formulation, qui comprend les étapes consistant :
(a) à préparer une solution du pyréthroïde dans un solvant aromatique ayant un point d'éclair d'environ 50°C.
(b) à mélanger la solution avec de l'eau en présence d'au moins un émulsionnant pour former une émulsion huile-dans-eau.
(c) à mélanger l'émulsion huile-dans-eau avec une matière solide hydratable et une quantité additionnelle d'eau pour favoriser la mise en émulsion et pour constituer une source d'hydratation de la matière solide dans un dispositif d'agglomération pour produire des granules, et
(d) à sécher les granules.

2. Procédé suivant la revendication 1, dans lequel la matière solide hydratable est du sulfate de calcium hémihydraté.

3. Procédé suivant la revendication 1, dans lequel l'insecticide pyréthroïde est choisi parmi des composés répondant à la formule 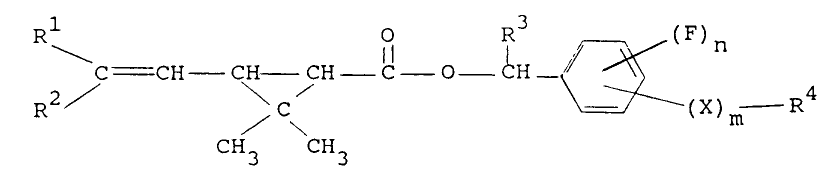 dans laquelle R¹ et R² sont choisis indépendamment dans le groupe comprenant le radical chloro et le radical trifluorométhyle ; R³ est de l'hydrogène ou un radical cyano ; R⁴ est choisi dans le groupe des radicaux méthyle et phényle ; X est de l'oxygène ; m a la valeur zéro ou un ; et n a une valeur de zéro à quatre.

4. Procédé suivant la revendication 3, dans lequel le composé est le cis-3-(Z-2-chloro-3,3,3-trifluoroprop-1-ényl)-2,2-diméthylcyclopropanecarboxylate de 2,3,5,6-tétrafluoro-4-méthylbenzyle.

5. Procédé suivant la revendication 1, dans lequel le solvant aromatique est un solvant ayant un point d'éclair d'environ 90 à environ 125°C.

6. Procédé suivant la revendication 1, dans lequel on fait tomber directement les granules du dispositif d'agglomération dans un appareil de séchage à lit fluide.
